# EUROPÄISCHE PATENTSCHRIFT

(11) **EP 3 824 193 B1**
(45) Veröffentlichungstag und Bekanntmachung des Hinweises auf die Patenterteilung: **17.09.2025**
(21) Anmeldenummer: 19714573.3
(22) Anmeldetag: 22.03.2019
(51) Int. Cl.: F16B 3/06, B25B 1/00, F16B 35/06, H01R 4/50, F16B 1/00, B23P 19/00, B25B 27/00, B25B 27/02, B25B 27/06, B25B 31/00

(54) **EINSATZ ZUR VERBINDUNG EINES ELEKTRISCHEN ANSCHLUSSES MIT EINER WAND, DEMONTAGEWERKZEUG UND AUSRICHTUNGSWERKZEUG FÜR EINEN EINSATZ SOWIE VERFAHREN ZUR REPARATUR EINES EINSATZES**
INSERT FOR CONNECTING AN ELECTRIC CONNECTION TO A WALL, DISASSEMBLY TOOL, AND ALIGNING TOOL FOR AN INSERT, AND METHOD FOR REPAIRING AN INSERT
INSERT SERVANT À RELIER UN RACCORDEMENT ÉLECTRIQUE À UNE PAROI, OUTIL DE DÉMONTAGE ET OUTIL D'ORIENTATION POUR UN INSERT AINSI QUE PROCÉDÉ DE RÉPARATION D'UN INSERT

(30) Priorität: 18.07.2018 DE 102018117366
(43) Veröffentlichungstag der Anmeldung: 26.05.2021
(73) Patentinhaber: Fairchild Fasteners Europe - Camloc GmbH, 65779 Kelkheim (Taunus) (DE)
(72) Erfinder: DACH, Alexander Sebastian, 99837 Berka/Werra (DE); JÜLING, Dieter, 65779 Kelkheim (DE)
(74) Vertreter: Keil & Schaafhausen Patentanwälte PartGmbB
(86) Internationale Anmeldenummer: PCT/EP2019/057279
(87) Internationale Veröffentlichungsnummer: WO 2020/015867

(56) Entgegenhaltungen:
- EP-A1- 1 376 766
- EP-A1- 2 263 826
- WO-A1-2018/011008
- CN-A- 103 996 908
- DE-U1- 202018 101 358
- US-A- 5 315 745
- US-B1- 6 257 939

## Beschreibung

Die Erfindung betrifft einen Einsatz zur Verbindung eines elektrischen Anschlusses mit einer Wand, beispielsweise einem dünnen Blech, mit einem Bolzen, insbesondere einem Zugbolzen, der einen Kopf sowie ein Verbindungsmittel aufweist und einem elektrisch leitfähigen Ring mit einer Durchgangsöffnung zur Aufnahme des Zugbolzens. Die Erfindung betrifft außerdem eine Anordnung aus einem solchen Einsatz mit einem Demontagewerkzeug zum Auspressen des Zugbolzens bzw. einem Ausrichtungswerkzeug zum Justieren des Rings in der Wand und ein Verfahren zur Reparatur eines Einsatzes.

Um die elektrische Leitfähigkeit zwischen einem Kabel und einem Blech herzustellen, ist es bekannt, einen Bolzen (Massebolzen oder Erdungsbolzen) an einem Blech mittels einer deformierbaren Hülse zu befestigen. Hierfür muss die Verbindung Zugkräften sowie einem Drehmoment widerstehen, welche beispielsweise bei der Befestigung eines Kabelschuhs auf einem Gewindebolzen durch eine Mutter erzeugt werden können. Dieses wird durch eine radiale Aufweitung und erhöhte Flächenpressung im Bereich des Bleches erreicht. Zusätzlich weitet sich die Hülse außerhalb des Bleches auf, so dass eine erhöhte Zugkraft erreicht werden kann. Die Übertragung des Stromes erfolgt an den Wänden der Bohrung im Blech. Die Installation und Verformung der Hülse muss sicherstellen, dass in diesem Bereich der Übergangswiderstand so niedrig wie möglich ist. Der Bolzen kann dabei elektrisch leitfähig sein, dies ist aber nicht notwendig, da der elektrische Strom durch den Kontakt eines Kabelschuhs mit dem elektrisch leitfähigen Ring direkt über den Ring zu der Wand fließen kann.

Aus der EP 0 880 199 B1 ist hierfür ein Einsatz der oben genannten Art bekannt, der einen Bolzen und einen elektrisch leitfähigen Ring aufweist. Der Bolzen weist einen Kopfabschnitt, der sich entlang einer ersten Längsachse erstreckt, sowie einen Schaft auf, welcher mit wenigstens einem Verbindungsmittel versehen ist. Der elektrisch leitfähige Ring ist mit einer Durchgangsöffnung zur Aufnahme des Bolzens versehen, die sich entlang einer zweiten Längsachse erstreckt. Der Kopf des Bolzens ist dabei annähernd als ein Kegelstumpf ausgebildet, der die zylindrisch ausgebildete Durchgangsöffnung des Rings aufweitet, wenn der Kopf in den Ring gezogen wird.

Weitere Einsätze sind aus der US 6,257,939 B1, der DE 20 2018 101358 U1, der WO 2018/011008 A1, der CN 103 996 908 A, der EP 1 376 766 A1, der US 5,315,745 A und der EP 2 263 826 A1 bekannt.

Bei der Installation oder während der Benutzung eines solchen Einsatzes kann es vorkommen, dass Beschädigungen an dem Einsatz, beispielsweise an dem Befestigungsmittel des Bolzens auftreten. Es kann daher erforderlich sein, einen solchen Bolzen auszutauschen. Außerdem kann es sein, dass der Ring bereits bei der Installation schräg in die Wand eingesetzt wird. Auch zur Korrektur des Rings muss in einem ersten Schritt der Bolzen entfernt werden.

Es ist daher eine Aufgabe der vorliegenden Erfindung, einen verbesserten Einsatz bereitzustellen, der eine spätere Reparatur ermöglicht, sowie entsprechende Werkzeuge zur Reparatur und ein Reparaturverfahren anzugeben.

Diese Aufgabe wird mit einem Einsatz mit den Merkmalen des Anspruchs 1 gelöst. Erfindungsgemäß weist der Einsatz zur Verbindung eines elektrischen Anschlusses mit einer Wand einen Bolzen mit einem Kopf und wenigstens einem Verbindungsmittel auf. An diesem Verbindungsmittel können elektrische Leiter, beispielsweise mittels eines Kabelschuhs befestigt werden. Als Verbindungsmittel können beispielsweise ein Gewinde, ein Bajonettverschluss oder ein Kreuzstift vorgesehen sein. Der erfindungsgemäße Einsatz weist darüber hinaus einen, elektrisch leitfähigen Ring mit einer Durchgangsöffnung zur Aufnahme des Bolzens auf. Die Durchgangsöffnung erstreckt sich von einer ersten Seite bis zu einer zweiten Seite. Der Ring kann aus einem plastisch verformbaren Material gefertigt sein und wird zur Befestigung an einer Wand in eine entsprechende Öffnung der Wand eingesetzt. Alternativ kann der Ring auch elastisch verformbar sein, wodurch ein Ring mehrfach verwendet werden kann. Daraufhin wird der Bolzen in den Ring von einer ersten Seite eingesetzt und dabei der Kopf des Bolzens in die Durchgangsöffnung des Rings gepresst und der Ring dadurch verformt. Durch die Verformung wird der Ring in der Öffnung der Wand und der Bolzen in dem Ring gehalten. Erfindungsgemäß weist der Ring an seiner Außenfläche einen Hinterschnitt in Richtung der zweiten Seite auf. Durch diesen Hinterschnitt ist es möglich von der zweiten Seite aus an dem Ring mit einem entsprechenden Werkzeug anzugreifen, um das Werkzeug an dem Ring abzustützen, insbesondere eine Zugkraft an den Ring anzusetzen. Damit ist es möglich, dass der Bolzen kontrolliert aus dem Ring ausgepresst wird. Zudem ist der Ring mit einem Absatz versehen, der einen relativ zu einem Hülsenabschnitt des übrigen Rings größeren Außendurchmesser aufweist. Der Absatz ist insbesondere an der Schaftseite oder zweiten Seite angeordnet. Der Hinterschnitt ist dabei in einer Außenkontur des Absatzes angeordnet. So kann der Ring zum Beispiel eine Außenkontur mit zwei jeweils zylindrischen Abschnitten aufweisen, von denen der Abschnitt mit dem größeren Außendurchmesser den Absatz bildet. Mittels des Absatzes kann der Ring an einer Seite der Wand, die mit dem elektrischen Anschluss verbunden werden soll, in einem die Durchgangsöffnung der Wand umgebenen Bereich anliegen. Dadurch wird der Ring besonders gut bezüglich der Wand ausgerichtet. Da der Hinterschnitt in dem Absatz angeordnet ist, kann er besonders einfach durch ein entsprechendes Werkzeug gegriffen werden. Erfindungsgemäß ist der Hinterschnitt durch eine Nut realisiert. Eine Nut bildet einen Hinterschnitt in beide Richtungen und kann daher ein Werkzeug in beide Richtungen abstützen. Bevorzugt ist die Nut senkrecht zu einer zentralen Achse des Rings ausgerichtet und insbesondere umlaufend um eine Außenkontur des Rings.

In einer bevorzugten Ausführungsform der Erfindung kann der Bolzen einen Schaft aufweisen, an dem das Verbindungsmittel angeordnet ist. Der Schaft des Bolzens kann dann aus der zweiten Seite der Durchgangsöffnung herausragen, die deshalb auch als Schaftseite bezeichnet wird. Die erste Seite wird abgrenzend als Kopfseite bezeichnet. Alternativ kann der Bolzen in der Art einer Mutter ausgeführt sein und innerhalb des Kopfes das Verbindungsmittel, beispielsweise ein Gewindeloch aufweisen. Die Begriffe Kopfseite und Schaft-seite werden nachfolgend auch für diese Ausführungsform verwendet.

In einer bevorzugten Ausführungsform der Erfindung weist der Kopf einen Bereich auf, dessen Außendurchmesser größer als der Innendurchmesser eines Bereichs des Rings ist. Dadurch wird der Ring beim Einpressen des Kopfes aufgeweitet und der Ring dadurch in der Wand verpresst.

In einer bevorzugten Ausführungsform der Erfindung verjüngt sich die Durchgangsöffnung des Rings, insbesondere von der Kopfseite zur Schaftseite des Rings. Dadurch wird eine besonders gleichmäßige Aufweitung des Rings erreicht, um diesen in der Wand zu fixieren.

Die Erfindung betrifft außerdem eine Anordnung mit einem Demontagewerkzeug zum Entfernen eines Bolzens eines beschriebenen Einsatzes. Dieses weist eine Klemmeinheit mit zumindest zwei Klemmbacken, mit je einem Vorsprung zum Eingriff in einen Hinterschnitt des Einsatzes auf, wobei die Klemmbacken bewegbar sind zwischen einer offenen Position, in der die Vorsprünge der Klemmbacken einen ersten Abstand aufweisen und einer geschlossenen Position, in der die Vorsprünge der Klemmbacken einen zweiten Abstand aufweisen der kleiner ist als der erste Abstand. Das Demontagewerkzeug weist außerdem einen Auspressbolzen auf, der innerhalb der Klemmeinheit angeordnet ist und relativ zu den Klemmbacken axial beweglich ist, um einen Bolzen aus dem Einsatz auszupressen.

Das Demontagewerkzeug weist ferner einen Klemmring auf, der über ein Gewinde mit der Klemmeinheit verbunden ist, derart, dass sich der Klemmring bei einer relativen Rotation des Klemmrings gegenüber der Klemmeinheit über die Klemmbacken schiebt, sodass die Klemmbacken von ihrer offenen Position in die geschlossene Position überführt werden. Dies führt zu einer besonders einfachen und sicheren Verrastung der Klemmbacken in ihrer geschlossenen Position. Das Demontagewerkzeug kann daher sicher an einem Einsatz festgeklemmt werden.

In einer bevorzugten Ausführungsform der Erfindung ist der Auspressbolzen des Demontagewerkzeugs über ein Gewinde mit der Klemmeinheit verbunden. Zur axialen Verschiebung des Auspressbolzens kann dieser dann einfach an einem Griff gedreht werden. Der Griff kann beispielsweise ein Handgriff oder Hebel sein. Alternativ kann ein Griff zum Ansetzen eines Werkzeugs, beispielsweise eines Schraubenschlüssels ausgebildet sein.

Die Erfindung betrifft außerdem eine Anordnung mit einem Ausrichtungswerkzeug zum Justieren eines in eine Wand eingesetzten Rings eines Einsatzes, welches im Wesentlichen einen Ausrichtungsbolzen und ein Gegenstück aufweist. Der Ausrichtungsbolzen hat einen zentralen Schaft zum Durchführen durch die Durchgangsöffnung des Rings, welches ein erstes Verbindungsmittel, insbesondere ein Außengewinde, aufweist. An diesem zentralen Schaft ist ein verbreiterter Kopf angeordnet, der eine Wandanlagefläche zur Abstützung an der Wand aufweist. Das Gegenstück weist ein inneres Element und ein äußeres Element auf, wobei das innere Element relativ zu dem äußeren Element axial verschiebbar ist. Das innere Element weist ein zweites Verbindungsmittel, insbesondere ein Innengewinde, zum Verbinden mit dem ersten Verbindungsmittel des Ausrichtungsbolzens auf. Das äußere Element weist eine Ringanlagefläche zur Abstützung des Gegenstücks an dem Ring auf. Wenn der Ausrichtungsbolzen mit seinem Verbindungsmittel in dem Gegenstück befestigt ist, kann durch axiale Verschiebung des inneren Elements zu dem äußeren Element die Wandanlagefläche relativ zur Ringanlagefläche bewegt werden. Dadurch kann der Ring in die Wand gepresst und somit ausgerichtet werden. Als Verbindungsmittel kommen auch hier Gewinde, Bajonettverschlüsse, Kreuzstifte oder andere Befestigungstechniken in Frage.

In einer bevorzugten Ausführungsform der Erfindung weist das Ausrichtungswerkzeug in dem verbreiterten Kopf eine Aussparung zur Aufnahme von aus der Wand überstehenden Bereichen des Rings auf. Damit wird sichergestellt, dass die Wandanlagefläche sich an der Wand abstützen kann.

Die Erfindung betrifft außerdem ein Verfahren zur Reparatur eines Einsatzes der in einer Wand eingesetzt ist, wobei ein Demontagewerkzeug mit den Klemmbacken in der offenen Position über den Ring des Einsatzes geschoben wird, die Klemmbacken, insbesondere durch Verdrehen des Klemmrings, in ihre geschlossene Position bewegt werden, wobei die Vorsprünge der Klemmbacken in den Hinterschnitt des Rings eingreifen. Dadurch ist das Demontagewerkzeug fest mit dem Ring des Einsatzes verbunden. Als nächstes wird der Auspressbolzen des Demontagewerkzeugs, insbesondere durch Drehen an einem Griff des Auspressbolzens, axial bewegt. Dadurch drückt dieser gegen den Bolzen des Einsatzes und schiebt diesen aus dem Ring des Einsatzes heraus. Danach kann ein neuer Bolzen in den Ring eingesetzt werden. Das Verfahren ermöglicht daher einen kontrollierten Austausch eines defekten Bolzens, ohne dass Beschädigungen an dem Ring oder der Wand auftreten können.

In einer bevorzugten Ausführungsform der Erfindung weist der neue Bolzen einen Kopf mit einer größeren Breite als der ausgepresste Bolzen auf. Beim Einsetzen des neuen Bolzens wird dieser dadurch wieder fest in dem Ring verpresst und somit stabil gehalten. Auch ein möglicherweise gelockerter Ring wird dadurch wieder vollständig fixiert.

In einer bevorzugten Ausführungsform der Erfindung wird vor dem Einsetzen des neuen Bolzens der Ring in der Wand justiert. Dazu wird ein Ausrichtungsbolzen eines Ausrichtungswerkzeugs in die Durchgangsöffnung des Rings eingesetzt, sodass eine Wandanlagefläche des Ausrichtungsbolzens an der Wand anliegt und insbesondere ein aus der Wand überstehender Bereich des Rings in einer Aussparung des Ausrichtungsbolzens aufgenommen ist.

Der Schaft des Ausrichtungsbolzens steht dann mit seinem Verbindungsmittel auf der anderen Seite des Rings heraus und kann dort mit dem Gegenstück verbunden werden. Dazu wird das Gegenstück des Ausrichtungswerkzeugs mit dem zweiten Verbindungsmittel des inneren Elements mit dem ersten Verbindungsmittel des zentralen Schafts verbunden, sodass eine Ringanlagefläche des äußeren Elements des Gegenstücks an dem Ring anliegt. Nun kann das innere Element relativ zu dem äußeren Element bewegt werden, sodass der Ausrichtungsbolzen mit der Wandanlagefläche gegen die Wand drückt und das Gegenstück mit der Ringanlagefläche gegen den Ring drückt, wodurch der Ring bezüglich der Wand ausgerichtet wird. Das innere Element kann relativ zu dem äußeren Element beispielsweise manuell, hydraulisch, pneumatisch oder elektromagnetisch bewegt werden.

Weitere Merkmale, Vorteile und Anwendungsmöglichkeiten der vorliegenden Erfindungen ergeben sich auch aus der nachfolgenden Beschreibung von Ausführungsbeispielen und unter Bezugnahme auf die Zeichnungen.

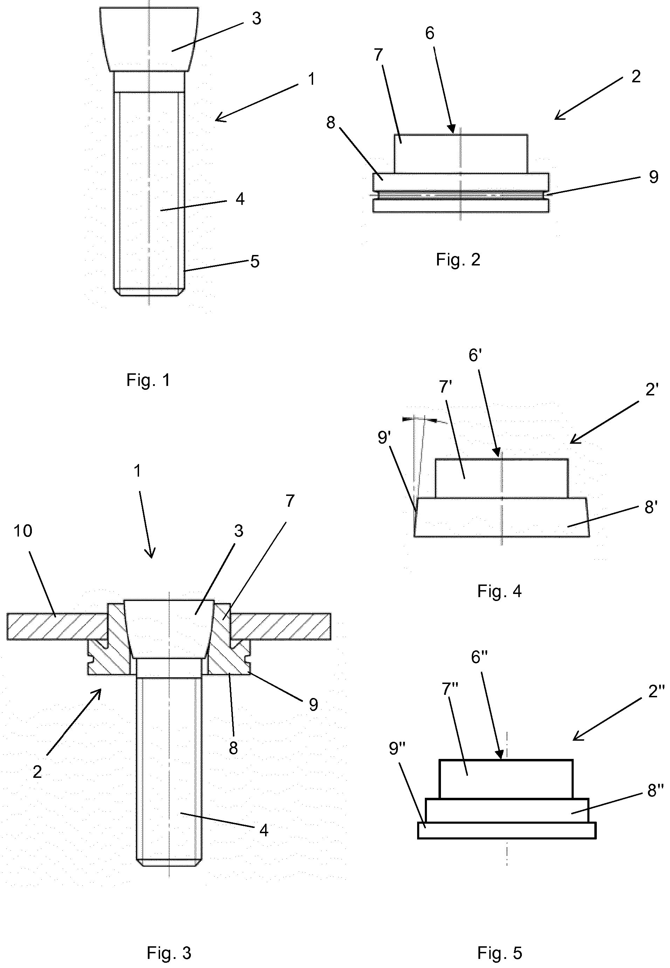

Es zeigen schematisch:
- Figur 1: in Schnittansicht einen Bolzen eines erfindungsgemäßen Einsatzes vor der Montage,
- Figur 2: in Aufsicht einen Ring eines erfindungsgemäßen Einsatzes vor der Montage,
- Figur 3: in Schnittansicht einen erfindungsgemäßen Einsatz nach der Montage in einer Wand,
- Figur 4: in Schnittansicht einen Ring eines alternativen Einsatzes vor der Montage,
- Figur 5: in Schnittansicht einen Ring eines alternativen Einsatzes vor der Montage,
- Figur 6: in einer Aufsicht eine erfindungsgemäße Anordnung mit einem Demontagewerkzeug,
- Figur 7: in Schnittansicht eine erfindungsgemäße Anordnung mit einem Demontagewerkzeug angesetzt an einem montierten Einsatz,
- Figur 8: in Schnittansicht ein alternatives Demontagewerkzeug angesetzt an einem montierten alternativen Einsatz,
- Figur 9: in Schnittansicht eine erfindungsgemäße Anordnung mit einem Ausrichtungswerkzeug angesetzt an einem montierten Einsatz,
- Figur 10: in Schnittansicht einen erfindungsgemäßen Einsatz nach der Montage in einer Wand mit einem als Mutter ausgeführten Bolzen,
- Figur 11: in Schnittansicht eine erfindungsgemäße Anordnung mit einem Demontagewerkzeug in

einer dritten Ausführungsform angesetzt an einem montierten Einsatz; Figur 1 zeigt einen elektrisch leitenden Bolzen 1 eines erfindungsgemäßen Einsatzes. Dieser weist einen Kopf 3 sowie einen Schaft 4 auf, der sich entlang einer zentralen Achse erstreckt. An der Außenfläche des Schafts 4 ist ein Außengewinde 5 vorgesehen, welches als Verbindungsmittel dient, um den Schaft 4 und damit den erfindungsgemäßen Einsatz mit einem elektrischen Leiter, beispielsweise über einen Kabelschuh zu verbinden. Figur 2 zeigt einen Ring 2 eines erfindungsgemäßen Einsatzes, der in eine Öffnung in einer Wand 10 eingesetzt werden kann. Der Ring 2 weist eine Durchgangsöffnung 6 auf, in die der Bolzen 1 mit seinem Schaft 4 eingesetzt werden kann. Die Durchgangsöffnung 6 ist dabei ein wenig kleiner gewählt als der Außendurchmesser des Kopfes 3 des Bolzens 1. Der Ring 2 weist einen Hülsenabschnitt 7 auf, welcher im Wesentlichen zylinderförmig ausgebildet ist.

Ein weiterer zylinderförmiger Bereich des Rings 2 weist einen größeren Außendurchmesser auf und ist als Absatz 8 ausgebildet. In der Außenkontur des Absatzes 8 ist wiederum eine Nut 9 angeordnet, welche den Ring 2 vollständig umläuft. In die Nut 9 kann mit Hilfe eines Werkzeuges, beispielsweise eines Demontagewerkzeugs 20, eingegriffen werden, um das Werkzeug an dem Ring 2 abzustützen.

Figur 3 zeigt einen erfindungsgemäßen Einsatz der bereits an einer Wand 10 befestigt ist. Dazu wurde der Ring 2 in eine Öffnung der Wand 10 eingesetzt und daraufhin der Bolzen 1 mit seinem Schaftende 4 in den Ring 2 auf der Seite des Hülsenabschnitts 7 eingeführt. Der Bolzen 1 wird durch Aufwenden einer Kraft mit seinem Kopf 3 in den Ring 2 eingepresst. Dadurch wird der Ring 2 aufgeweitet und somit in der Öffnung der Wand 10 verpresst und dadurch fixiert.

Ein nicht erfindungsgemäßer, alternativer Ring 2' ist in Figur 4 dargestellt. Der Ring 2' weist wie der in Figur 2 dargestellte Ring 2 einen hülsenförmigen Abschnitt 7' auf und einen Absatz 8', der im Vergleich zu dem Hülsenabschnitt 7' mit einem größeren Außendurchmesser ausgeführt ist. An der Außenkontur des Absatzes 8' ist abweichend von der Ausführungsform der Figur 2 keine Nut 9 vorgesehen, sondern der Hinterschnitt ist durch eine konische Außengeometrie 9' gebildet. Die Außenkontur des Absatzes 8' bildet daher einen Winkel zu der zentralen Achse des Ringes 2'.

Ein weiterer, nicht erfindungsgemäßer, alternativer Ring 2" ist in Figur 5 dargestellt. Der Ring 2" weist wie der in Figur 2 dargestellte Ring 2 einen hülsenförmigen Abschnitt 7" auf und einen Absatz 8", der im Vergleich zu dem Hülsenabschnitt 7" mit einem größeren Außendurchmesser ausgeführt ist. An der Außenkontur des Absatzes 8" ist abweichend von der Ausführungsform der Figur 2 keine Nut 9 vorgesehen, sondern der Hinterschnitt ist durch einen zusätzlichen Absatz 9" gebildet. Ausgehend von dem Absatz 8" stellt der zusätzliche Absatz
9" eine zusätzliche Verbreiterung dar, mit einem Außendurchmesser der nochmals größer als der Außendurchmesser des Absatzes 8" ist.

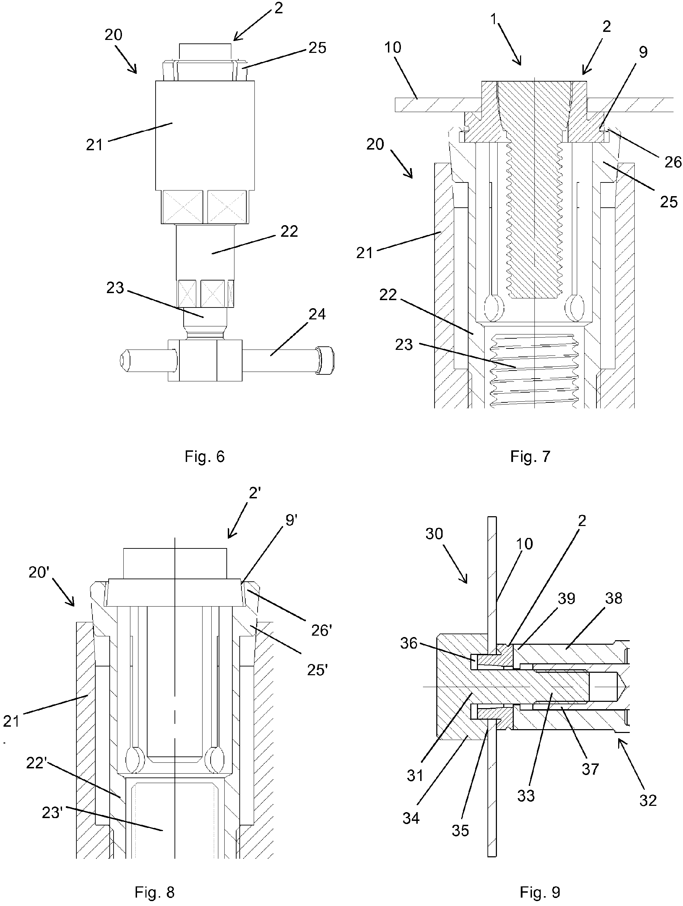

Figur 6 zeigt ein Demontagewerkzeug 20 mit dem ein Bolzen 1 aus einem in der Wand 10 eingesetzten Einsatz entfernt werden kann. Das Demontagewerkzeug 20 weist Klemmbacken 25 auf, welche mit dem Hinterschnitt des Einsatzes, beispielsweise einer Nut 9, in Eingriff gebracht werden können. Die Klemmbacken 25 sind an einer Klemmeinheit 22 angeordnet, welche ein Außengewinde aufweist über das ein Klemmring 21 geschraubt ist. Durch Drehung des Klemmrings 21 wird dieser axial über die Klemmbacken 25 geschoben, so dass die Klemmbacken 25 nach innen in Richtung der zentralen Achse des Demontagewerkzeugs 20 gebogen werden. Die Klemmbacken werden dadurch in ihre geschlossene Position überführt. Innerhalb der Klemmeinheit 22 ist ein Innengewinde angeordnet, in welches ein Auspressbolzen 23 geschraubt ist. Zur rotatorischen Bewegung des Auspressbozens 23 weist dieser einen Griff 24 auf, der von Hand gedreht werden kann. Durch den Gewindeeingriff des Auspressbolzens 23 mit der Klemmeinheit 22 wird die rotatorische Bewegung in eine axiale Bewegung überführt.

Die Funktionsweise des Demontagewerkzeugs 20 kann der Schnittdarstellung der Figur 7 entnommen werden. Diese zeigt einen in eine Wand 10 eingesetzten Einsatz mit einem Bolzen 1 und einem Ring 2. Das Demontagewerkzeug 20 ist mit seinen Klemmbacken 25 über den Ring 2 und insbesondere über die Nut 9 des Ringes 2 geschoben. Die Klemmbacken 25 werden durch einen federnd ausgeführten Bereich der Klemmeinheit 22 in ihrer offenen Position gehalten. In der offenen Stellung sind die Vorsprünge 26 noch außerhalb der Nut 9 angeordnet. Die Klemmbacken 25 weisen an ihrer Außenseite eine bezüglich der zentralen Achse des Einsatzes, beziehungsweise des Demontagewerkzeugs, eine leichte Abschrägung auf. Entsprechend weist der Klemmring 21 an seiner vorderen Kante, welche mit den Klemmbacken 25 in Kontakt steht, eine entsprechende Abschrägung auf. Bei Rotation des Klemmringes 21 wird dieser durch den Gewindeeingriff mit der Klemmeinheit 22 axial relativ zur Klemmeinheit 22 und somit zu den Klemmbacken 25 verschoben. Der Klemmring 21 schiebt sich daher in der Darstellung der Figur 6 nach oben über die Klemmbacken 25, welche durch die Abschrägung jeweils nach innen in Richtung der zentralen Achse ausweichen müssen. Dadurch werden die Vorsprünge 26 der Klemmbacken 25 in die Nut 9 des Ringes 2 geschoben und das Demontagewerkzeug 20 dadurch an dem Einsatz befestigt. Die Figur 6 zeigt außerdem das obere Ende des Auspressbolzens 23, welches innerhalb der Klemmeinheit 22 angeordnet ist. Dieses hat in der dargestellten Position noch einen Abstand gegenüber dem Schaft 4 des Bolzens 1. Durch Drehen am Griff 24 des Auspressbolzens 23 wird dieses durch den Gewindeeingriff mit der Klemmeinheit 22 relativ zu der Klemmeinheit 22 und damit relativ zu dem festgehaltenen Einsatz axial bewegt. Der Auspressbolzen 23 kommt dadurch mit dem Ende des Schaftes 4 des Bolzens 1 in Kontakt und schiebt diesen bei weiterer axialer Bewegung aus dem Ring 2 heraus. Da das Demontagewerkzeug in der Nut 9 des Rings 2 befestigt ist, wird die Kraft lediglich zwischen Bolzen 1 und Ring 2 ausgeübt. Es wird damit verhindert, dass bei dem Auspressen des Bolzens Beschädigungen, wie beispielsweise Verformungen, an der Wand 10 auftreten können.

Eine nicht erfindungsgemäße, alternative Ausführungsform des Demontagewerkzeugs 20' ist in der Figur dargestellt. Dieses ist an den Ring 2' der

Figur 4 angepasst. Die Bauteile und Funktion des Klemmrings 21' und des Auspressbolzens 23' entsprechen denen der entsprechenden Teile der Figur 5 und 6. Die Klemmeinheit 22' weist jedoch Klemmbacken 25' auf, die einen Vorsprung 26' haben, der an die konische Außenform 9' des Rings 2' angepasst ist. Der Vorsprung 26' hat demnach eine Abschrägung, welche im Wesentlichen der konischen Außenform 9' des Ringes entspricht. Dadurch kann das Demontagewerkzeug 20' fest an dem Ring 2' befestigt werden.

Ein Ausrichtungswerkzeug 30 ist in der Figur 9 dargestellt. Das Ausrichtungswerkzeug 30 besteht im Wesentlichen aus zwei Elementen, dem Ausrichtungsbolzen 31 und dem Gegenstück 32. Das Gegenstück 32 ist aus einem inneren Element 37 und einem äußeren Element 38 aufgebaut, die axial zueinander verschiebbar sind. Auf der Innenseite des inneren Elementes ist ein Innengewinde angeordnet, welches als Verbindungsmittel zu dem Ausrichtungsbolzen 31 dient. Der Ausrichtungsbolzen 31 weist einen verbreiterten Kopf 34 und einen zentralen Schaft 33 auf, der ein Außengewinde aufweist, um ihn in das Innengewinde des inneren Elements 37 zu schrauben.

Um einen Einsatz, der an einer Wand 10 befestigt ist, auszurichten, muss in einem ersten Schritt, wie oben beschrieben, der Bolzen 1 aus dem Ring 2 ausgepresst werden. Danach wird der Ausrichtungsbolzen 31 mit seinem zentralen Schaft 33 durch die Durchgangsöffnung 6 des Rings 2 geschoben, der noch in der Wand 10 befestigt ist. Der Ausrichtungsbolzen 31 liegt dann mit seinen Wandanlageflächen 35 an der Wand 10, in einem den Ring umgebenden Bereich der Wand 10, an. Die Bereiche des Rings 2, die aus der Wand 10 überstehen, sind dabei in Aussparungen 36 des Ausrichtungsbolzens 31 aufgenommen. Das Gegenstück 32 wird daraufhin mit seinem inneren Element 37 auf den Schaft 33 des Ausrichtungsbolzens 31 geschraubt bis das Gegenstück 32 mit seiner Ringanlagefläche 39 des äußeren Elements 38 an dem Ring 2 anliegt. Nun wird beispielsweise durch eine hydraulische Krafteinwirkung das innere Element 37 in der Zeichnung der Figur 8 nach rechts gezogen. Dadurch wird der Ausrichtungsbolzen 31 in Richtung des äußeren Elements 38 des Gegenstücks 32 bewegt und die Wandanlagefläche 35 gegen die Ringanlagefläche 39 verschoben, sodass der Ring 2 in der Wand 10 ausgerichtet wird.

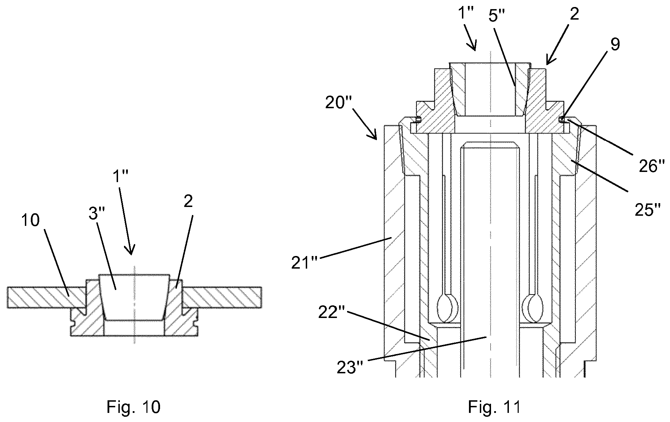

Fig. 10 zeigt einen erfindungsgemäßen Einsatz, bei der der Bolzen 1" keinen Schaft 4 aufweist, sondern in der Art einer Mutter ausgeführt ist. Der Bolzen 1" weist im Wesentlichen einen Kopf 3" auf mit einer Durchgangsbohrung und einem darin angeordneten Innengewinde 5" als Verbindungsmittel. Im Übrigen entspricht die Ausführungsform der Fig. 10 der in Fig. 3 gezeigten Ausführungsform.

Fig. 11 zeigt eine dritte Ausführungsform des Demontagewerkzeugs 20" welches dazu eingerichtet ist, in einen Ring 2 der Ausführungsform der Fig. 2 einzugreifen und einen Bolzen 1" ohne Schaft 4 auszupressen. Das Demontagewerkzeug 20" entspricht im Wesentlichen der beschriebenen Ausführungsform der Fig. 7 mit einem Klemmring 21" zum Öffnen und Schließen der Klemmbacken 25" der Klemmeinheit 22", sodass diese mit dem Vorsprung 26" in eine Nut 9 des Rings 2 eingreifen. Abweichend von Fig. 7 weist das Demontagewerkzeug 20" einen Auspressbolzen 23" auf, welcher länger und schmaler ausgeführt ist. Der Auspressbolzen 23" kann daher zum Auspressen des Bolzens 1" in das Durchgangsloch 6 des Rings 2 eingeführt werden.

### Bezugszeichenliste

- 1, 1": Bolzen
- 2, 2', 2": Ring
- 3, 3": Kopf
- 4: Schaft
- 5, 5": Außengewinde
- 6, 6', 6": Durchgangsöffnung
- 7, 7', 7": Hülsenabschnitt
- 8, 8', 8": Absatz
- 9: Nut
- 9': konische Außengeometrie
- 9": zusätzlicher Absatz
- 10: Wand
- 20, 20', 20": Demontagewerkzeug
- 21, 21', 21": Klemmring
- 22, 22', 22": Klemmeinheit
- 23, 23', 23": Auspressbolzen
- 24: Griff
- 25, 25', 25": Klemmbacken
- 26, 26', 26": Vorsprung
- 30: Ausrichtungswerkzeug
- 31: Ausrichtungsbolzen
- 32: Gegenstück
- 33: zentraler Schaft
- 34: verbreiterter Kopf
- 35: Wandanlagefläche
- 36: Aussparung
- 37: inneres Element
- 38: äußeres Element
- 39: Ringanlagefläche

## Patentansprüche

1. Einsatz zur Verbindung eines elektrischen Anschlusses mit einer Wand (10) aufweisend
einen elektrisch leitenden Ring (2) mit einer Durchgangsöffnung (6) zur Aufnahme eines Bolzens (1, 1"),
und einen Bolzen (1, 1"), der einen Kopf (3, 3") sowie wenigstens ein Verbindungsmittel (5, 5") aufweist, wobei
der Ring (2) mit einem Absatz (8) versehen ist, der einen relativ zu dem übrigen Ring (2) größeren Außendurchmesser aufweist und an seiner Außenfläche einen Hinterschnitt (9) aufweist, **dadurch gekennzeichnet, dass** der Hinterschnitt durch eine Nut (9) realisiert ist.

2. Einsatz nach Anspruch 1, **dadurch gekennzeichnet, dass** der Bolzen (1, 1") einen Schaft (4) aufweist an dem das wenigstens eine Verbindungsmittel (5) angeordnet ist und/oder eine Bohrung aufweist in der das wenigstens eine Verbindungsmittel (5") angeordnet ist.

3. Einsatz nach einem der vorhergehenden Ansprüche, **dadurch gekennzeichnet, dass** sich die Durchgangsöffnung (6) des Rings (2) verjüngt.

4. Einsatz nach einem der vorhergehenden Ansprüche, **dadurch gekennzeichnet, dass** der Kopf (3, 3") einen Bereich aufweist, dessen Außendurchmesser größer als der Innendurchmesser eines Bereichs des Rings (2) ist.

5. Anordnung aufweisend einen Einsatz nach einem der Ansprüche 1 bis 4 und ein Demontagewerkzeug (20, 20") zum Entfernen eines Bolzens (1, 1") des Einsatzes, wobei das Demontagewerkzeug eine Klemmeinheit (22, 22") mit zumindest zwei Klemmbacken (25, 25"), mit je einem Vorsprung (26, 26") zum Eingriff in einen Hinterschnitt (9) des Einsatzes aufweist, und wobei die Klemmbacken (25, 25") bewegbar sind zwischen einer offenen Position, in der die Vorsprünge (26, 26") der Klemmbacken (25, 25") einen ersten Abstand aufweisen und einer geschlossenen Position, in der die Vorsprünge (26, 26") der Klemmbacken (25, 25") einen zweiten Abstand aufweisen der kleiner ist als der erste Abstand,
und wobei das Demontagewerkzeug einen Auspressbolzen (23, 23") aufweist, der innerhalb der Klemmeinheit (22, 22") angeordnet ist und relativ zu den Klemmbacken (25, 25") axial beweglich ist, um einen Bolzen (1, 1") aus dem Einsatz auszupressen, **dadurch gekennzeichnet, dass** ein Klemmring (21, 21") vorgesehen ist, der über ein Gewinde mit der Klemmeinheit (22, 22") verbunden ist, derart, dass sich der Klemmring (21, 21") bei einer relativen Rotation über die Klemmbacken (25, 25") schiebt, sodass die Klemmbacken (25, 25") von ihrer offenen Position in die geschlossene Position überführt werden.

6. Anordnung nach Anspruch 5, **dadurch gekennzeichnet, dass** der Auspressbolzen (23, 23") über ein Gewinde mit der Klemmeinheit (22, 22") verbunden ist und einen Griff (24) zum Drehen des Auspressbolzens (23, 23") aufweist.

7. Anordnung aufweisend einen Einsatz nach einem der Ansprüche 1 bis 4 und ein Ausrichtungswerkzeug (30) zum Justieren eines in eine Wand (10) eingesetzten Rings (2) des Einsatzes, **dadurch gekennzeichnet, dass** ein Ausrichtungsbolzen (31) vorgesehen ist, mit einem zentralen Schaft (33) mit einem ersten Verbindungsmittel, insbesondere einem Außengewinde, und zum Durchführen durch die Durchgangsöffnung (6) des Rings (2), sowie einem verbreiterten Kopf (34) mit einer Wandanlagefläche (35) zur Abstützung an der Wand (10) sowie einem Gegenstück (32) mit einem inneren Element (37) und einem äußeren Element (38), wobei das innere Element (37) relativ zu dem äußeren Element (38) axial verschiebbar ist und ein zweites Verbindungsmittel, insbesondere ein Innengewinde, zum Verbinden mit dem ersten Verbindungsmittel aufweist und wobei das äußere Element (38) eine Ringanlagefläche (39) zur Abstützung an dem Ring (2) aufweist.

8. Anordnung nach Anspruch 7, **dadurch gekennzeichnet, dass** der verbreiterte Kopf (34) eine Aussparung (36) zur Aufnahme von aus der Wand (10) überstehenden Bereichen des Rings (2) aufweist.

9. Verfahren zur Reparatur eines Einsatzes nach einem der Ansprüche 1 bis 4 der in einer Wand (10) eingesetzt ist, **dadurch gekennzeichnet, dass**
- ein Demontagewerkzeug (20, 20") nach einem der Ansprüche 5 oder 6 mit den Klemmbacken (25, 25") in der offenen Position über den Ring (2) des Einsatzes geschoben wird,
- die Klemmbacken (25, 25") in ihre geschlossene Position bewegt werden, wobei die Vorsprünge (26, 26") der Klemmbacken (25, 25") in den Hinterschnitt (9) des Rings (2) eingreifen,
- der Auspressbolzen (23, 23") des Demontagewerkzeugs (20, 20") axial bewegt wird, sodass dieser gegen den Bolzen (1, 1") des Einsatzes drückt und diesen aus dem Ring (2) des Einsatzes auspresst,
- ein neuer Bolzen (1, 1") in den Ring (2) eingesetzt wird.

10. Verfahren nach Anspruch 9, **dadurch gekennzeichnet, dass** der neue Bolzen (1, 1") einen Kopf (3, 3") mit einer größeren Breite als der ausgepresste Bolzen (1, 1") aufweist.

11. Verfahren nach Anspruch 9 oder 10, **dadurch gekennzeichnet, dass**
- vor dem Einsetzen des neuen Bolzens (1, 1") ein Ausrichtungsbolzen (31) eines Ausrichtungswerkzeugs (30) nach einem der Ansprüche 7 oder 8 in die Durchgangsöffnung (6) des Rings (2) eingesetzt wird, sodass eine Wandanlagefläche (35) des Ausrichtungsbolzens (31) an der Wand (10) anliegt und insbesondere ein aus der Wand (10) überstehender Bereich des Rings (2) in einer Aussparung (36) des Ausrichtungsbolzens (31) aufgenommen ist,
- ein Gegenstück (32) des Ausrichtungswerkzeugs (30) mit dem zweiten Verbindungsmittel des inneren Elements (37) mit dem ersten Verbindungsmittel des zentralen Schafts (33) verbunden wird, sodass eine Ringanlagefläche (39) des äußeren Elements (38) des Gegenstücks (32) an dem Ring (2) anliegt,
- das innere Element (37) relativ zum äußeren Element (38) bewegt wird, sodass der Ausrichtungsbolzen (31) mit der Wandanlagefläche (35) gegen die Wand (10) drückt und das Gegenstück (32) mit der Ringanlagefläche (39) gegen den Ring (2) drückt, wodurch der Ring (2) bezüglich der Wand (10) ausgerichtet wird.

## Claims

1. An insert for connecting an electrical terminal to a wall (10) comprising an electrically conductive ring (2) with a through-opening (6) for receiving a bolt (1, 1"),
and a bolt (1, 1") having a head (3, 3") and at least one fastening element (5, 5"), wherein
the ring (2) is equipped with a shoulder (8) having an outer diameter larger than that of the remaining portion of the ring (2), and has an undercut (9) on its outer surface,
**characterized in that** the undercut is formed by a groove (9).

2. The insert according to claim 1, **characterized in that** the bolt (1, 1") comprises a shaft (4) on which the at least one fastening element (5) is arranged and/or comprises a bore in which the at least one fastening element (5") is arranged.

3. The insert according to any one of the preceding claims, **characterized in that** the through-opening (6) of the ring (2) tapers.

4. The insert according to any one of the preceding claims, **characterized in that** the head (3, 3") comprises a region whose outer diameter is greater than the inner diameter of a region of the ring (2).

5. An assembly comprising an insert according to any one of claims 1 to 4 and a disassembly tool (20, 20") for removing a bolt (1, 1") from the insert, wherein the disassembly tool comprises a clamping unit (22, 22") with at least two clamping jaws (25, 25"), each having a projection (26, 26") for engaging in an undercut (9) of the insert, and wherein the clamping jaws (25, 25") are movable between an open position in which the projections (26, 26") of the clamping jaws (25, 25") have a first distance, and a closed position in which the projections (26, 26") of the clamping jaws (25, 25") have a second distance that is smaller than the first distance,
and wherein the disassembly tool comprises an ejection bolt (23, 23") arranged within the clamping unit (22, 22") and axially movable relative to the clamping jaws (25, 25") in order to eject a bolt (1, 1") from the insert, **characterized in that** a clamping ring (21, 21") is provided, which is connected via a thread to the clamping unit (22, 22"), such that the clamping ring (21, 21") slides over the clamping jaws (25, 25") upon relative rotation and thereby moves the clamping jaws (25, 25") from the open position into the closed position.

6. The assembly according to claim 5, **characterized in that** the ejection bolt (23, 23") is connected via a thread to the clamping unit (22, 22") and comprises a handle (24) for rotating the ejection bolt (23, 23").

7. An assembly comprising an insert according to any one of claims 1 to 4 and an alignment tool (30) for adjusting a ring (2) of the insert inserted into a wall (10), **characterized in that** an alignment bolt (31) is provided, comprising a central shaft (33) with a first fastening element, in particular an external thread, and configured to pass through the through-opening (6) of the ring (2), as well as an enlarged head (34) with a wall contact surface (35) for being supported against the wall (10),
and a counterpart (32) comprising an inner element (37) and an outer element (38), wherein the inner element (37) is axially displaceable relative to the outer element (38) and comprises a second fastening element, in particular an internal thread, for connecting to the first fastening element, and wherein the outer element (38) comprises a ring contact surface (39) for being supported against the ring (2).

8. The assembly according to claim 7, **characterized in that** the enlarged head (34) comprises a recess (36) for receiving portions of the ring (2) protruding from the wall (10).

9. A method for repairing an insert according to any one of claims 1 to 4 that is inserted in a wall (10), **characterized in that**
- a disassembly tool (20, 20") according to any one of claims 5 or 6 is slid over the ring (2) of the insert with the clamping jaws (25, 25") in the open position,
- the clamping jaws (25, 25") are moved to their closed position, wherein the projections (26, 26") of the clamping jaws (25, 25") engage the undercut (9) of the ring (2),
- the ejection bolt (23, 23") of the disassembly tool (20, 20") is moved axially such that it presses against the bolt (1, 1") of the insert and ejects it from the ring (2) of the insert,
- a new bolt (1, 1") is inserted into the ring (2).

10. The method according to claim 9, **characterized in that** the new bolt (1, 1") comprises a head (3, 3") with a greater width than the ejected bolt (1, 1").

11. The method according to claim 9 or 10, **characterized in that**
- before inserting the new bolt (1, 1"), an alignment bolt (31) of an alignment tool (30) according to any one of claims 7 or 8 is inserted into the through-opening (6) of the ring (2), such that a wall contact surface (35) of the alignment bolt (31) rests against the wall (10), and in particular a portion of the ring (2) protruding from the wall (10) is received in a recess (36) of the alignment bolt (31),
- a counterpart (32) of the alignment tool (30) is connected via the second fastening element of the inner element (37) to the first fastening element of the central shaft (33), such that a ring contact surface (39) of the outer element (38) of the counterpart (32) rests against the ring (2),
- the inner element (37) is moved relative to the outer element (38) such that the alignment bolt (31) with the wall contact surface (35) presses against the wall (10) and the counterpart (32) with the ring contact surface (39) presses against the ring (2), thereby aligning the ring (2) with respect to the wall (10).

## Revendications

1. L'invention concerne un insert permettant de connecter une borne électrique à une paroi (10)
un anneau électriquement conducteur (2) avec une ouverture traversante (6) pour recevoir un boulon (1, 1"),
et un boulon (1, 1") ayant une tête (3, 3") et au moins un élément de fixation (5, 5"), dans lequel
l'anneau (2) est équipé d'un épaulement (8) ayant un diamètre extérieur supérieur à celui de la partie restante de l'anneau (2), et a une contre-dépouille (9) sur sa surface extérieure, **caractérisée en ce que** la contre-dépouille est formée par une rainure (9).

2. Insert selon la revendication 1, **caractérisé en ce que** le boulon (1, 1") présente une tige (4) sur laquelle est disposé l'au moins un élément de fixation (5) et/ou présente un perçage dans lequel est disposé l'au moins un élément de fixation (5'').

3. Insert selon l'une des revendications précédentes, **caractérisé en ce que** l'ouverture de passage (6) de la bague (2) se rétrécit.

4. Insert selon l'une des revendications précédentes, **caractérisé en ce que** la tête (3, 3'') présente une zone dont le diamètre extérieur est supérieur au diamètre intérieur d'une zone de la bague (2).

5. Ensemble comprenant un insert selon l'une quelconque des revendications 1 à 4 et un outil de démontage (20, 20") pour enlever un boulon (1, 1") à partir de l'insert, dans lequel l'outil de démontage comprend une unité de serrage (22, 22") avecau moins deux mâchoires de serrage (25, 25"), chacun ayant une saillie (26, 26") pour s'engager dans une contre-dépouille (9) de l'insert, et dans lequel les mâchoires de serrage (25, 25") sont mobiles entre une position ouverte dans laquelle les saillies (26, 26'') des mâchoires de serrage (25, 25") ont une première distance, et une position fermée dans laquelle les saillies (26, 26'') des mâchoires de serrage (25, 25") ont une deuxième distance qui est inférieure à la première distance,
et dans lequel l'outil de démontage comprend un boulon d'éjection (23, 23'') disposés à l'intérieur de l'unité de serrage (22, 22") et mobile axialement par rapport aux mâchoires de serrage (25, 25'') pour éjecter un pêne (1, 1") à partir de l'insert, **caractérisé en ce qu'**une bague de serrage (21, 21") est prévue, qui est reliée par un filetage à l'unité de serrage (22, 22"), de telle sorte que la bague de serrage (21, 21") glisse sur les mâchoires de serrage (25, 25") lors de la rotation relative et déplace ainsi les mâchoires de serrage (25, 25'') de la position ouverte à la position fermée.

6. Ensemble selon la revendication 5, **caractérisé en ce que** le boulon d'éjection (23, 23") est relié par un filetage à l'unité de serrage (22, 22") et comprend une poignée (24) pour faire tourner le boulon d'éjection (23, 23").

7. Ensemble comprenant un insert selon l'une quelconque des revendications 1 à 4 et un outil d'alignement (30) pour ajuster une bague (2) de l'insert inséré dans une paroi (10), **caractérisé en ce qu'**un boulon d'alignement (31) est prévu, comprenant une tige centrale (33) avec un premier élément de fixation, en particulier un filetage extérieur, et configuré pour passer à travers l'ouverture traversante (6) de la bague (2), ainsi qu'une tête élargie (34) avec une surface de contact de paroi (35) pour être supportée contre la paroi (10),
et une contre-pièce (32) comprenant un élément intérieur (37) et un élément extérieur (38), dans lequel l'élément intérieur (37) est axialement déplaçable par rapport à l'élément extérieur (38) et comprend un deuxième élément de fixation, en particulier un filetage interne, destiné à être relié au premier élément de fixation, et dans lequel l'élément extérieur (38) comprend une surface de contact de bague (39) destinée à être supportée contre la bague (2).

8. Ensemble selon la revendication 7, **caractérisé en ce que** la tête élargie (34) comprend un évidement (36) pour recevoir des parties de la bague (2) faisant saillie de la paroi (10).

9. Procédé de réparation d'un insert selon l'une quelconque des revendications 1 à 4 qui est inséré dans une paroi (10), **caractérisé en ce que**
- un outil de démontage (20, 20") selon l'une quelconque des revendications 5 ou 6 est glissé sur la bague (2) de l'insert avec les mâchoires de serrage (25, 25") en position ouverte,
- les mâchoires de serrage (25, 25'') sont déplacées vers leur position fermée, les saillies (26, 26'') des mâchoires de serrage (25, 25'') venant en prise avec la contre-dépouille (9) de l'anneau (2),
- le boulon d'éjection (23, 23") de l'outil de démontage (20, 20'') est déplacé axialement de sorte qu'il appuie contre le boulon (1, 1") de l'insert et l'éjecte de la bague (2) de l'insert,
- un nouveau boulon (1, 1") est inséré dans la bague (2).

10. Procédé selon la revendication 9, **caractérisé en ce que** le nouveau boulon (1, 1") comprend une tête (3, 3") de largeur supérieure à celle du boulon éjecté (1, 1").

11. Procédé selon la revendication 9 ou 10, **caractérisé en ce que**
- Avant l'insertion du nouveau boulon (1, 1"), un boulon d'alignement (31) d'un outil d'alignement (30) selon l'une quelconque des revendications 7 ou 8 est inséré dans l'ouverture traversante (6) de la bague (2), de sorte qu'une surface de contact de paroi (35) du boulon d'alignement (31) repose contre la paroi (10), et en particulier une partie de la bague (2) faisant saillie de la paroi (10) est reçue dans un évidement (36) du boulon d'alignement (31),
- une contre-pièce (32) de l'outil d'alignement (30) est reliée par l'intermédiaire du deuxième élément de fixation de l'élément intérieur (37) au premier élément de fixation de l'arbre central (33), de sorte qu'une surface de contact annulaire (39) de l'élément extérieur (38) de la contre-pièce (32) repose contre l'anneau (2),
- l'élément interne (37) est déplacé par rapport à l'élément externe (38) de sorte que le boulon d'alignement (31) avec la surface de contact de paroi (35) appuie contre la paroi (10) et la contre-pièce (32) avec la surface de contact de bague (39) appuie contre la bague (2), alignant ainsi la bague (2) par rapport à la paroi (10).
